# NEUE EUROPÄISCHE PATENTSCHRIFT

(11) **EP 2 925 463 B2**
(45) Veröffentlichungstag und Bekanntmachung des Hinweises auf die Entscheidung über den Einspruch: **13.03.2024**
(45) Hinweis auf die Patenterteilung: 26.12.2018
(21) Anmeldenummer: 13807919.9
(22) Anmeldetag: 26.11.2013
(51) Int. Cl.: B21C 37/09, B21C 37/15, B29C 47/02, F16L 58/10, F16L 9/147

(54) **VERFAHREN ZUR HERSTELLUNG EINER MEHRSCHICHTIGEN ROHRLEITUNG, ROHRLEITUNG UND KLIMAANLAGE MIT EINER SOLCHEN ROHRLEITUNG**
METHOD FOR PRODUCING A MULTI-LAYER PIPE LINE, PIPE LINE, AND AIR-CONDITIONING SYSTEM HAVING SUCH A PIPE LINE
PROCÉDÉ DE PRODUCTION D'UNE GAINE MULTICOUCHES, GAINE ET INSTALLATION DE CLIMATISATION ÉQUIPÉE D'UNE TELLE GAINE

(30) Priorität: 29.11.2012 DE 102012111584
(43) Veröffentlichungstag der Anmeldung: 07.10.2015
(73) Patentinhaber: REHAU Industries SE & Co. KG, 95111 Rehau (DE); Rehau Polymers (Suzhou) Co Ltd., Jiangsu 215400 (CN)
(72) Erfinder: GRIEBEL, Dragan, 201210 Shanghai (CN); HERENSPERGER, David, 200136 Pudong Shangai (CN); OELSCHLEGEL, Alexander, 95176 Konradsreuth (DE); WINTER, Karlheinz, 95111 Rehau (DE); STEFFL, Udo, 95466 Weidenberg (DE); BÖHM, Volker, 95234 Sparneck (DE)
(74) Vertreter: Rinck, Kay-Jochen
(86) Internationale Anmeldenummer: PCT/EP2013/003566
(87) Internationale Veröffentlichungsnummer: WO 2014/082735

(56) Entgegenhaltungen:
- EP-A1- 1 361 388
- DE-A1- 3 808 728
- GB-A- 1 302 433
- US-A- 3 263 054

## Beschreibung

Die Erfindung betrifft ein Verfahren zur Herstellung einer Rohrleitung die zum Transport von Kältemittel in einer Klimaanlage dient.

Kältemittel, welche üblicherweise in Klimaanlagen eingesetzt werden, müssen verschiedenen Anforderungen genügen. Zum einen müssen sie eine Dampfdruckkurve aufweisen, die es ermöglicht, dass bei den entsprechenden Betriebstemperaturen das Kältemittel eine möglichst große Wärmemenge aufnehmen bzw. abgeben kann. Darüber hinaus muss das Kältemittel gesundheitlich unbedenklich sein. Schließlich ist es erforderlich, dass aus der Klimaanlage ggf. entweichende Gase des Kältemittels keinen klimaschädigenden Einfluss haben, insbesondere die Kältemittel also FCKW-frei sind. Die chemische Industrie hat entsprechende Kältemittel entwickelt, welche sich in der Praxis auch bewährt haben. Ein Beispiel für ein in der Praxis häufig eingesetztes Kältemittel ist R-410A. R-410A besteht aus einem Gemisch von R-32 (Difluormethan) und R-125 (Pentafluorethan). Die in der Praxis heutzutage eingesetzten Kältemittel erfüllen die vorstehenden Bedingungen zumindest weitgehend, besitzen jedoch eine vergleichsweise hohe chemische Aggressivität.

Als Transportleitung für entsprechende Kältemittel in Klimaanlagen werden gemäß dem Stand der Technik regelmäßig Kupferleitungen eingesetzt. Diese besitzen jedoch gegenüber den heute in der Praxis etablierten Kältemitteln keine vollständige chemische Beständigkeit. Nach einer gewissen Betriebsdauer der Klimanlage kann es daher zu einer Korrosion der Kupferleitung kommen. Dies birgt einerseits die Gefahr eines Versagens der Kupferleitung. Darüber hinaus entstehen andererseits bei der Korrosion auch hochgiftige Stoffe, beispielsweise Phosgen. Hierauf wird z.B. in dem Fachartikel "Ant-nest corrosion of copper tubing in air-conditioning units", Revista de Metallurgia, 42 (5), September - Oktober, Seiten 367 bis 381, 2006, ISSN: 0034-8570 ausführlich hingewiesen. Es besteht daher in doppelter Hinsicht ein Problem beim Einsatz von Kupferleitungen für Kältemittel in Klimaanlagen. Korrosion tritt hierbei insbesondere an den Enden der Kupferleitungen auf, die mit entsprechenden Anschlussstellen der Klimaanlagenkomponenten verbunden sind.

Ein weiterer Nachteil der im Stand der Technik eingesetzten Kupferrohre besteht darin, dass sie starr sind und ihre Länge daher transportbedingt maximal nur wenige Meter betragen kann. Bei in Gebäuden installierten Klimaanlagen muss daher die Rohrleitung regelmäßig aus einer Vielzahl von geraden Rohrstückern und Bogenelementen mittels Flanschverbindungen zusammengebaut werden. Dies macht die Installation der Klimaanlagen sehr aufwändig und teuer. Darüber hinaus sind gerade die Flanschverbindungen besonders korrosionsanfällig.

Die GB 1 302 433 A offenbart eine für den Transport von Fluiden allgemein geeignete Rohrleitung mit einer Innenschicht aus rostfreiem Stahl, einer Kunststoffzwischenschicht sowie einer auf diese Zwischenschicht aufgetragene Ummantelung. Aus der EP 1 361 388 A1 ist ein Verbundrohr zum Auskleiden einer Rohrleitung bekannt, welches insbesondere für die Sanierung von defekten Gasleitungen vorgesehen ist. Die DE 3 808 728 A1 beschreibt ein Verfahren zur Herstellung eines Längsnahtrohres mit einer Beschichtung aus Kunststoff. In der US 3 263 054 A ist eine aus Bandmaterial hergestellte rostfreie Leitung aus Stahl beschrieben.

Der Erfindung liegt die Aufgabe zugrunde, ein Verfahren zur Herstellung einer Rohrleitung zum Transport von Kältemitteln in einer Klimaanlage anzugeben, welche eine hohe Korrosionsbeständigkeit aufweist und darüber hinaus einfach und kostengünstig zu verlegen ist.

Erfindungsgemäß wird die Aufgabe gelöst durch ein Verfahren gemäß Patentanspruch 1. Die, zweckmäßigerweise vollflächige, Edelstahlschicht bildet bei der fertig hergestellten Rohrleitung die innerste Schicht und wird entsprechend mit dem zu transportierenden Medium beaufschlagt. Erfindungsgemäß wird also von der Verwendung des Werkstoffes Kupfer bei der Herstellung der Rohrleitung Abstand genommen. Stattdessen wird eine dünne, vollflächige Innenschicht aus Edelstahl hergestellt, welche eine sehr hohe Korrosionsbeständigkeit gegenüber den in der Praxis gängigen Kältemitteln aufweist. Entsprechend besteht beim Einsatz einer mit der erfindungsgemäßen Lehre hergestellten Rohrleitung keine Korrosionsgefahr, geschweige denn die Gefahr einer Bildung von giftigen Stoffen, wie sie beim Einsatz von Kupferleitungen zu befürchten ist. Gegenüber dem Einsatz eines herkömmlichen Edelstahlrohres weist die erfindungsgemäße Lehre ebenfalls erhebliche Vorteile auf. So wird einerseits durch die geringe Schichtdicke der Innenschicht ein niedriger Materialverbrauch von teurem Edelstahl sichergestellt, da die endlose Kunstoffummantelung für die mechanische Stabilität sorgt. Gleichzeitig weist die erfindungsgemäß hergestellte Rohrleitung aufgrund der Dimensionierung der beiden Schichtdicken eine so hohe Flexibilität auf, dass eine Rohrleitungsverlegung mit kleinen Biegeradien möglich ist. So kann die erfindungsgemäße Rohrleitung ein- oder mehrfach mit einem Biegeinnenradius von 0,2 m, bevorzugt höchstens 0,1 m, um 90° knickfrei gebogen werden. Aufgrund der Möglichkeit der endlosen Herstellung der erfindungsgemäßen Rohrleitung und der gleichzeitigen hohen Biegeflexibilität kann eine nahtlose Verbindung zwischen einzelnen Anlagenkomponenten einer Klimaanlage durch die Rohrleitung bereitgestellt werden, ohne dass hierfür Flanschverbindungen zur Verbindung einzlener Rohrstücke, Krümmern oder dergleichen realisiert werden müssen. Dies erlaubt eine besonders schnelle und kostengünstige Verlegung der erfindungsgemäß hergestellten Rohrleitung. Der Begriff "endlos" meint, dass die Rohrleitung und damit auch die Schichten der Rohrleitung eine nahezu unbegrenzte Länge aufweisen können, also beispielsweise die Rohrleitung in einer Länge von mindestens 20 m, z.B. mindestens 50 m oder auch mindestens 100 m auf eine Transporttrommel aufwickelbar ist.

Die einander benachbarten Ränder sind mit Stumpfstoß miteinander verschweißt, das heißt, die Ränder werden unmittelbar nebeneinander positioniert und durch die Schweißnaht miteinander verbunden. Das Edelstahlband kann zur Herstellung der Innenschicht auf einen Dorn aufgewickelt werden, der nach dem Schweißvorgang entfernt wird. Hierdurch wird eine exakte, beispielsweise zylindrische, Geometrie der Innenschicht gewähr- leistet und auch der Schweißvorgang erheblich erleichtert.

Zweckmäßigerweise wird eine Innenschicht mit einer Schichtdicke von höchstens 0,3 mm bereitgestellt, um einen möglichst geringen Verbrauch an Edelstahl sicher zu stellen. Andererseits beträgt die Dicke der Edel-stahl-Innenschicht vorteilhafterweise mindestens 0,02 mm, z. B. mindestens 0,04 mm. Hierdurch wird insbesondere die Diffusionsdichtigkeit der Innenschicht gewährleistet. Die Schichtdicke der Kunststoffschicht beträgt erfindungsgemäß mindestens 2 mm, um für eine ausreichende Stabilität der Rohrleitung zu sorgen. Andererseits beträgt vorteilhafterweise die Schichtdicke der Kunststoffschicht maximal 4 mm, insbesondere maximal 3 mm, um eine gute Flexibilität der Rohrleitung zu gewährleisten.

Die Innenschicht kann mit einer Kunststoffschicht aus Polyethylen, insbesondere vernetztem Polyethylen, ummantelt werden. Alternativ hierzu ist es jedoch auch möglich, die Kunststoffschicht aus einem HDPE herzustellen. Andere Kunststoffmateriallen, wie beispielsweise Polypropylen, sollen hierdurch jedoch nicht ausgeschlossen werden.

Die Edelstahl-Innenschicht weist zweckmäßigerweise einen Innendurchmesser von 5 bis 15 mm, auf. Dieser Durchmesser entspricht dann auch dem Durchmesser des freien Strömungsquerschnittes der Rohrteilung.

"Edelstahl" im Sinne der Erfindung meint insbesondere einen Stahl nach EN 10020 und ist eine Bezeichnung für legierte und unlegierte Stähle mit besonderem Reinheitsgrad, z. B. Stähle, deren Schwefel- und Phosphorgehalt 0,025 % nicht überschreitet. Erfindungsgemäß enthält der Edelstahl mindestens 10 Gewichts-% Chrom. Beispiele für geeignete Edelstähle sind WNr. 1.4003, 1.4006, 1.4016, 1.4021, 1.4104, 1.4301, 1.4305, 1.4306, 1.4307, 1.4310, 1.4316, 1.4401, 1.4404, 1.4440, 1.4435, 1.4452, 1.4462, 1.4541, 1.4571, 1.4581, 1.4841 und 1.7218. Insbesondere können ganz allgemein Edelstähle gemäß EN 10027-2 in Form von unlegierten oder aber auch legierten Stählen verwendet werden. Geeignet z.B. die Qualitäten 304, 304L bzw. 444.

Erfindungsgemäß ist zwischen der Innenschicht und der Kunststoffschicht eine Haftvermittierschicht vorgesehen. Diese Haftvermittlerschicht verstärkt die Verbindung der beiden vorgenannten Schichten und verbessert in vorteilhafter Weise gleichzeitig die Knickstabilität der Rohrleitung. Als Material für die Haftvermittlerschichl kann ein Maleinsäureanhydrid (MAH), ein Methylmethacrylat (MMA) oder auch ein epoxy-modifiziertes Polyethylen oder Polypropylen zum Einsatz kommen. Denkbar sind auch Mischungen zweier oder mehrerer der vorgenannten Materialien. Die Haftvermittlerschicht wird im Extrusionsverfahren vor der Kunststoffschlcht auf die Innenschicht aufgetragen werden.

Gegenstand der Erfindung ist auch eine Rohrleitung gemäß Patentanspruch 5. Gegenstand der Erfindung ist weiterhin eine Klimaanlage mit mehreren, voneinander beabstandeten Anlagenkomponenten, einem fluiden Kältemittel, welches beim Betrieb der Klimaanla-ge zwischen den Anlagenkomponenten zirkuliert und mindestens einer erfindungsgemäß hergestellten Rohr-leitung, die die Anlagenkomponenten verbindet und zum Transport des Kältemittels zwischen den Anlagenkomponenten dient. Die Rohrleitung kann hierbei eine Länge von mindestens 1 m, z.B. mindestens 5 m, insbesondere mindestens 10 m aufweisen. Zweckmäßigerweise stellt die Rohrleitung eine nahtlose Verbindung zwischen den Anlagenkomponenten her. Dies ist aufgrund des endlosen Charakters der Rohrleitung sowie deren hoher Biegeflexibilität möglich. Die Herstellung von Anschlussverbindungen zu Verlängerungsstücken bzw. Krümmern oder dergleichen ist daher regelmäßig nicht erforderlich. Zweckmäßigerweise ist die in der Klimaanlage verbaute Rohrleitung ein- oder mehrfach mit einem Biegeinnenradius von höchstens 2 m, z. B. höchstens 1 m, insbesondere höchstens 0,50 m, um mindestens 5°, z. B. mindestens 15°, insbesondere mindestens 30°, gebogen.

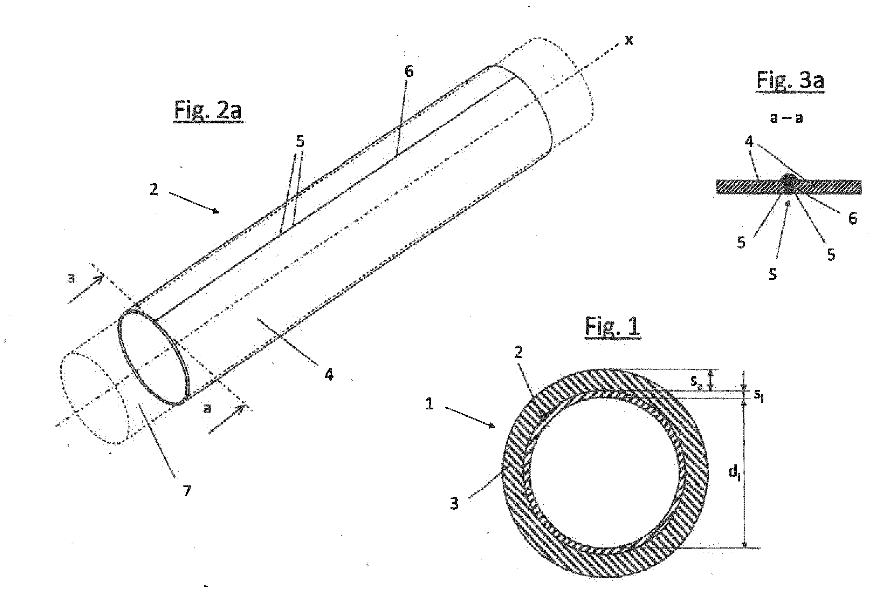

Die Fig. 1 zeigt eine erfindungsgemäß hergesteille Rohrleitung 1 in einer Querschnittdarstellung. Die Rohrleitung 1 weist eine endlose Innenschicht 2 aus Edelstahl mit einer (übertrieben dargestellten) Schichtdicke von sᵢ = 0,2 mm auf. Die Edelstahl-Innenschicht 2 ist vollflächig ausgebildet, so dass sie eine geschlossene innere Oberfläche der Rohrleitung 1 definiert, und bildet die innerste Schicht der fertig hergestellten Rohrleitung 1. Die Edelstahl-Innenschicht 2 ist ummantelt von einer mittels eines Extrusionsverfahrens aufgebrachten, und daher ebenfalls endlosen Kunststoffschicht 3 aus vernetztem Polyethylen mit einer Schichtdicke von sₐ = 3 mm. Der Innendurchmesser dᵢ der Edelstahl-Innenschicht 2 beträgt im Ausführungsbeispiel 10 mm. Er definiert gleichzeitig den freien Strömungsquerschnltt der Rohrleitung 1.

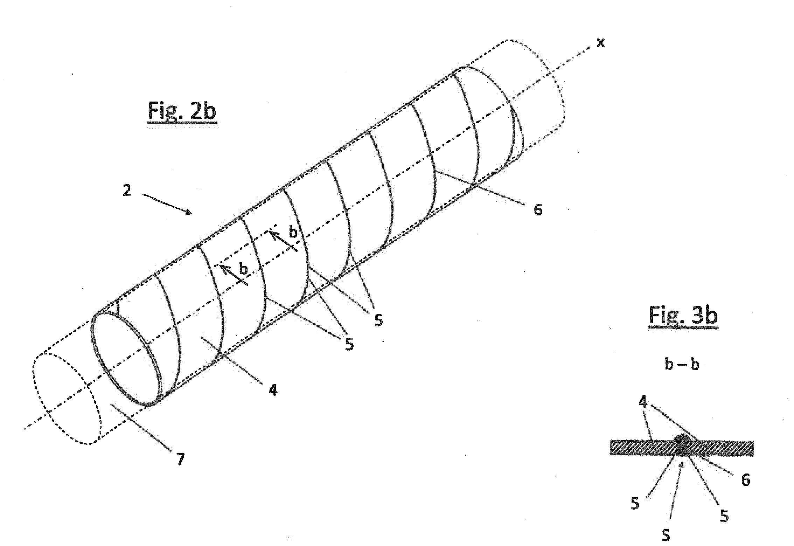

Beim Verfahren zur Herstellung der Innenschicht 2 gemäß Fig. 2a wird die Innenschicht 2 aus einem axial zu einer Rohrform gewickelten endlosen Edelstahlband 4 hergestellt, bei dem die einander benachbarten Ränder 5 in axialer Längsrichtung x durchgängig miteinander verschweißt werden. Die Fig. 3a zeigt ausschnittsweise den Axialschnitt a - a gemäß Fig. 2a. Hierbei ist erkennbar, dass die durch die erzeugte Rohrform einander benachbarten Ränder 5 des Edelstahlbandes 4 mit Stumpfstoß S in Axialrichtung x miteinander verschweißt werden. Dies heißt, dass die Ränder 5 nebeneinander positioniert und durch eine durchgängige, in Axialrichtung x verlaufende Schweißnaht 6 miteinander verbunden werden. Das endlose Edelstahlband 4 wird - wie aus Fig. 2a ersichtlich - zur Herstellung der Innen-schicht 2 auf einen (gestrichell dargestellten) Dorn 7 zu einer Rohrform aufgewickelt, der nach dem Schweißvorgang entfetnt wird. Die Edelstahl-Innenschicht 2 wird mittels des bereits genannten Extrusionsverfahrens mit der in Fig. 1 dargestellten Kunststoffschicht 3 ummantell. An dieser Stelle sei erwähnt, dass die Schweißnaht 6 in Fig. 1 nicht dargestellt ist. Vor der Auftragung der Kunststoffschicht 3 auf die Edelstahl-Innenschicht 2 wird eine (nicht dargestellte) Haftvermittlerschicht zur Verbesserung der Anbindung der Kunststoffschicht 3 an die Edelstahl-Innenschicht 2 im Extrusionsverfahren aufgebracht. Diese Haftvermittierschicht kann aus einem MAH, einem MMA oder einem epoxy-modifizierten Polyethylen oder Polypropylen bestehen.

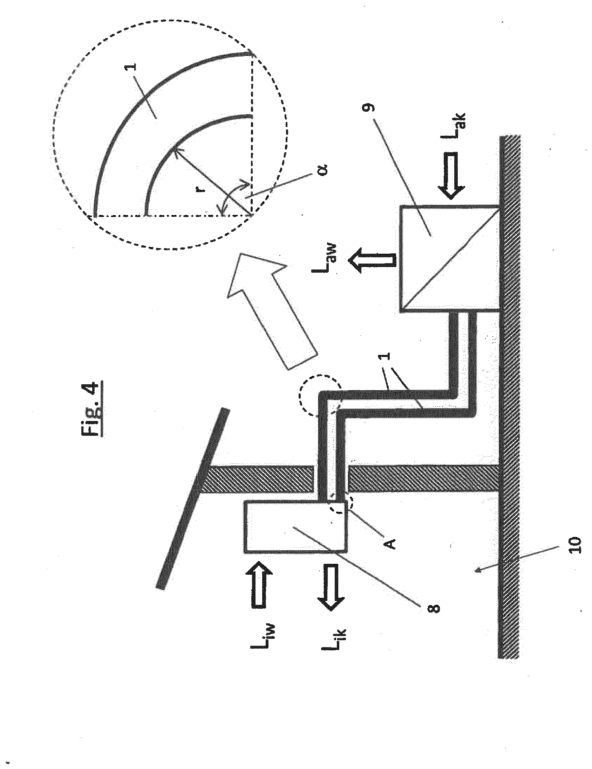

Die Fig. 4 zeigt eine Klimaanlage mit mehreren, voneinander beabstandeten Anlagenkomponenten 8, 9, wobei eine Anlagenkomponente 8 ein Innenmodul der Klimaanlage, eine weitere Anlagenkomponente das Außenmodul 9 der Klimaanlage darstellt. Das Innenmodul 8 ist an der Innenseite eines Gebäudes 10 befestigt, während das Außenmodul 9 im Freien installiert ist. In das Innenmodul 8 strömt warme Gebäudeluft L_{iw} ein, die dort abgekühlt wird und das Innenmodul 8 als gekühlte Gebäudeluft Lᵢₖ verlässt. Gleichzeitig wird im Außenmodul 9 Außenluft Lₐₖ angesaugt, welche das Außenmodul 9 als erwärmte Luft L_{aw} verlässt. Zwischen Außenmodul 9 und Innenmodul 8 sind zwei Rohrleitungen 1 vorgesehen, welche gemäß dem in den Figuren 1 bis 3 beschriebenen Verfahren hergestellt wurden. Die Rohrleitungen 1 verbinden fluldtechnisch das Außenmodul 9 mit dem Innenmodul 8 und dienen zum Transport eines fluiden Kältemittels, welches zwischen Innenmodul 8 und Außenmadul 9 zirkuliert. Im Ausführungsbeispiel weisen die Rohrlellungen 1 eine Länge von mindestens 5 m auf. Die Fig. 4 zeigt ferner, dass die Rohrleitungen 1 eine nahtlose Verbindung zwischen den Anlagenkomponenten 8, 9 herstellen, die Rohrleitungen 1 also als jeweils einslückige Elemente zwischen den Anlagenkomponenten angeordnet sind. Dies wird durch den endlosen Charakter der Rohrlellungen 1 unc insbesondere auch durch deren hohe Flexibilität Rohrleitung gewährleistet. Dem vergrößerten Ausschnitt in Fig. 4 ist zu entnehmen, dass die beiden Rohrlellungen 1 dort jeweils um einen Winkel von α = 90° gebogen sind, wobei der Biegeinnenradius r lediglich 20 cm beträgt. Dies erlaubt eine platzsparende Verlegung, ohne dass hierfür auf aufwändig anzuschließende Rohrbögen oder dergleichen zurückgegriffen werden muss. Zur Installation werden die Rohrlellungen 1 einfach von einer auf einer (nicht dargestellten) Transporttrommel aufgerollten "Mutter-Rohrleitung" abgeschnitten und dann verlegt Die Längen der Rohrlellungen 1 werden hierbei so bemessen, dass diese vom Innenmodul 6 bis zum Außenmodul 9 reichen.

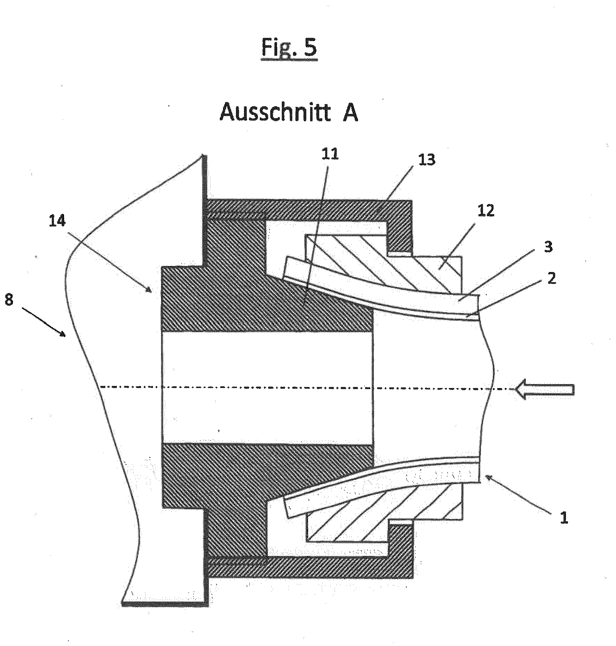

Die Fig. 5 zeigt die Anbindung eines Rohrleitungsendes an eine Anlagenkomponente, hier das Innenmodul 8, in vergrößerter Ausführung. Es ist erkennbar, dass die Rohrleitung 1 zur Anbindung an das Innenmodul 8 endseilig aufgeweitet ist. Das aufgeweitete Rohrleitungsende umschließt einen konisch ausgebildeten Anschlussstutzen 11 der Anlagenkomponente 8 und ist mit diesem verpresst. Die Verpressung erfolgt über eine außen am Rohrleitungsende anliegende Stütz-bzw. Krallhülse 12, welche eine nicht näher dargestellte innere Struktur, z. B. in Form von Riefen, Zähnen oder dergleichen, aufweisen kann. Die Hülse 12 ist über eine Überwurfmutter 13 mit einem Stützkörper 14 der Anlagenkomponente 8 verbunden, an den im Ausführungsbeispiel der konisch ausgebildete Anschlussslutzen 11 angeformt ist. Im Rahmen der Erfindung liegt aber auch eine zweiteilige Ausführung, bei der Stützkörper und Anschlussstutzen zwei separate, miteinander verbundene Elemente sind. Zur Herstellung der Verbindung muss somit lediglich die Überwurfmutter 13 mit dem Stülzkörper 14 fest verschraubt werden. Die Stütz- bzw. Krallhülse 12 stellt dann gemeinsam mit dem konischen Anschlussstutzen 11 eine fluiddichte Anbindung das Rohrieitungsendes an die Anlagenkomponente 8 her.

## Patentansprüche

1. Verfahren zur Herstellung einer mehrschichtigen Rohrleitung (1) zum Transport von Kältemittel in einer Klimaanlage,
- wobei zunächst eine endlose Innenschicht (2) aus Edelstahl mit einer Schichtdicke (sᵢ) von höchstens 0,3 mm, und mit einem Innendurchmesser (dᵢ) von 3 bis 20 mm bereitgestellt wird, welche die innerste Schicht der Rohrleitung (1) bildet,
- wobei danach die endlose Innenschicht (2) mittels eines Extrusionsverfahrens mit einer Kunststoffschicht (3) mit einer Schichtdicke (sₐ) von mindestens 2 mm und höchstens 5 mm ummantelt wird,
- wobei vor der Auftragung der Kunststoffschicht (3) auf die Innenschicht (2) eine Haftvermittlerschicht zur Verbesserung der Anbindung der Kunststoffschicht (3) an die Innenschicht (2) sowie der Knickstabilität der Rohrleitung (1) im Extrusionsverfahren aufgebracht wird,
- so dass die Rohrleitung (1) mit einem Biegeinnenradius (r) von 0,2 m um einen Winkel (α) von 90° knickfrei biegbar ist,
wobei die Innenschicht (2) aus einem axial zu einer Rohrform gewickelten endlosen Edelstahlband (4) hergestellt wird, bei dem die einander benachbarten Ränder (5) in axialer Längsrichtung (x) durchgängig miteinander verschweißt werden,
- wobei die einander benachbarten Ränder (5) mit Stumpfstoß (S) miteinander verschweißt werden, und
- wobei für die Innenschicht (2) ein Edelstahl mit einem Chromgehalt von mindestens 10 Gew.-% verwendet wird.

2. Verfahren nach Anspruch 1, **dadurch gekennzeichnet, dass** das Edelstahlband (4) auf einen Dorn (7) aufgewickelt wird, der nach dem Schweißvorgang entfernt wird.

3. Verfahren nach Anspruch 1 oder 2, **dadurch gekennzeichnet, dass** eine Innenschicht (2) mit einem Innendurchmesser (dᵢ) von 5 bis 15 mm bereitgestellt wird.

4. Verfahren nach einem der Ansprüche 1 bis 3, **dadurch gekennzeichnet, dass** die Innenschicht (2) mit einer Kunststoffschicht (3) aus Polyethylen, insbesondere vernetztem Polyethylen, ummantelt wird.

5. Rohrleitung (1) zum Transport von Kältemittel in einer Klimaanlage, mit
- einer die innerste Schicht der Rohrleitung (1) bildenden endlosen Innenschicht (2) aus Edelstahl mit einer Schichtdicke (sᵢ) von höchstens 0,3 mm und mit einem Innendurchmesser (dᵢ) von 3 bis 20 mm,
- einer die endlose Innenschicht (2) ummantelnden Extrusions-Kunststoffschicht (3) mit einer Schichtdicke (sₐ) von mindestens 2 mm und höchstens 5 mm und
- einer zwischen Innenschicht und Kunststoffschicht (3) angeordneten Extrusions-Haftvermittlerschicht, welche die Anbindung der Kunststoffschicht (3) an die Innenschicht (2) sowie der Knickstabilität der Rohrleitung (1) verbessert,
- so dass die Rohrleitung (1) mit einem Biegeinnenradius (r) von 0,2 m um einen Winkel (α) von 90° knickfrei biegbar ist,
- wobei die Innenschicht (2) aus einem axial zu einer Rohrform gewickelten endlosen Edelstahlband (4) hergestellt ist, bei dem die einander benachbarten Ränder (5) in axialer Längsrichtung (x) durchgängig miteinander verschweißt sind, und
- wobei die einander benachbarten Ränder (5) mit Stumpfstoß (S) miteinander verschweißt sind, und
- wobei die Innenschicht (2) aus Edelstahl einen Chromgehalt von mindestens 10 Gew.-% aufweist.

6. Klimaanlage mit
- mehreren, voneinander beabstandeten Anlagenkomponenten (8, 9),
- einem fluiden Kältemittel, welches beim Betrieb der Klimaanlage zwischen den Anlagenkomponenten (8, 9) zirkuliert und
- mindestens einer Rohrleitung (1) nach Anspruch 5, die die Anlagenkomponenten (8, 9) verbindet und zum Transport des Kältemittels zwischen den Anlagenkomponenten (8, 9) dient.

7. Klimaanlage nach Anspruch 6, **dadurch gekennzeichnet, dass** die Rohrleitung (1) eine Länge von mindestens 1 m, z. B. mindestens 5 m, insbesondere mindestens 10 m, aufweist.

8. Klimaanlage nach Anspruch 6 oder 7, **dadurch gekennzeichnet, dass** die Rohrleitung (1) eine nahtlose Verbindung zwischen den Anlagenkomponenten (8, 9) herstellt.

9. Klimaanlage nach einem der Ansprüche 6 bis 8, **dadurch gekennzeichnet, dass** die Rohrleitung (1) ein- oder mehrfach mit einem Biegeradius (r) von höchstens 2 m, z. B. höchstens 1 m, insbesondere höchstens 50 cm, um einen Winkel (α) von mindestens 5°, z. B. mindestens 15°, insbesondere mindestens 30°, gebogen ist.

10. Klimaanlage nach einem der Ansprüche 6 bis 9, **dadurch gekennzeichnet, dass** die Rohrleitung (1) zur Anbindung an eine Anlagenkomponente (8, 9) endseitig aufgeweitet ist.

11. Klimaanlage nach Anspruch 10, **dadurch gekennzeichnet, dass** das aufgeweitete Rohrleitungsende einen konisch ausgebildeten Anschlussstutzen (11) der Anlagenkomponente (8, 9) umschließt und mit diesem verpresst ist.

## Claims

1. Method for producing a multilayer pipeline (1) for transporting refrigerants in an air conditioning system,
- wherein first an endless inner layer (2) of stainless steel with a layer thickness (sᵢ) of at most 0.3 mm and with an inner diameter (dᵢ) of 3 to 20 mm is provided, which forms the innermost layer of the pipeline (1),
- wherein the continuous inner layer (2) is then sheathed by means of an extrusion process with a plastic layer (3) with a layer thickness (sₐ) of at least 2 mm and at most 5 mm,
- wherein prior to application of the plastic layer (3) to the inner layer (2), an adhesion-promoting layer is applied in the extrusion process to improve the connection of the plastic layer (3) to the inner layer (2) and the kink resistance of the pipeline (1),
- so that the pipeline (1) can be bent kink-free with a bend inner radius (r) of 0.2 m about an angle (α) of 90°,
- wherein the inner layer (2) is produced from an endless stainless steel band (4) wound axially into a pipe shape on which the edges (5) adjacent to one another are welded continuously to one another in an axial longitudinal direction (x),
- wherein the edges (5) adjacent to one another are welded to one another with a butt joint (S), and
- wherein for the inner layer (2) a stainless steel with a chromium content of at least 10 percent by weight is used.

2. Method according to claim 1, **characterised in that** the stainless steel band (4) is wound onto a mandrel (7), which is removed following the welding process.

3. Method according to claim 1 or 2, **characterised in that** an inner layer (2) is provided with an inner diameter (dᵢ) of 5 to 15 mm.

4. Method according to any one of claims 1 to 3, **characterised in that** the inner layer (2) is sheathed with a plastic layer (3) of polyethylene, in particular cross-linked polyethylene.

5. Pipeline (1) for transporting refrigerants in an air conditioning system, with
- an endless inner layer (2) of stainless steel forming the innermost layer of the pipeline (1), with a layer thickness (sᵢ) of at most 0.3 mm and with an inner diameter (dᵢ) of 3 to 20 mm,
- an extruded plastic layer (3) with a layer thickness (sₐ) of at least 2 mm and at most 5 mm sheathing the endless inner layer (2) and
- an extruded adhesion-promoting layer, which is arranged between inner layer and plastic layer (3) and improves the connection of the plastic layer (3) to the inner layer (2) and the kink resistance of the pipeline (1),
- so that the pipeline (1) can be bent kink-free with a bend inner radius (r) of 0.2 m about an angle (α) of 90°,
- wherein the inner layer (2) is produced from an endless stainless-steel band (4) wound axially into a pipe shape on which the edges (5) adjacent to one another are welded continuously to one another in an axial longitudinal direction (x), and
- wherein the edges (5) adjacent to one another are welded to one another with a butt joint (S), and
- wherein the inner layer (2) of stainless steel has a chromium content of at least 10 percent by weight.

6. Air conditioning system with
- a number of system components (8, 9) spaced from one another,
- a liquid refrigerant, which circulates between the system components (8, 9) in operation of the air conditioning system, and
- at least one pipeline (1) according to claim 5, which connects the system components (8, 9) and serves to transport the refrigerant between the system components (8, 9).

7. Air conditioning system according to claim 6, **characterised in that** the pipeline (1) has a length of at least 1 m, e.g. at least 5 m, in particular at least 10 m.

8. Air conditioning system according to claim 6 or 7, **characterised in that** the pipeline (1) creates a seamless connection between the system components (8, 9).

9. Air conditioning system according to any one of claims 6 to 8, **characterised in that** the pipeline (1) is bent singly or multiple times with a bend radius (r) of at most 2 m, e.g. at most 1 m, in particular at most 50 cm, about an angle (α) of at least 5°, e.g. at least 15°, in particular at least 30°.

10. Air conditioning system according to any one of claims 6 to 9, **characterised in that** the pipeline (1) is widened at the end for connection to a system component (8, 9).

11. Air conditioning system according to claim 10, **characterised in that** the widened pipeline end encloses a conically formed connecting piece (11) of the system component (8, 9) and is pressed with this.

## Revendications

1. Procédé de fabrication d'une conduite multicouche (1) destinée au transport de réfrigérant dans une installation de climatisation,
- dans lequel, en premier lieu, une couche intérieure (2) sans fin en acier inoxydable ayant une épaisseur de couche (sᵢ) de 0,3 mm au maximum et un diamètre intérieur (dᵢ) de 3 à 20 mm est fournie, laquelle forme la couche la plus à l'intérieur de la conduite (1),
- dans lequel la couche intérieure (2) sans fin est ensuite enrobée d'une couche de matière plastique (3) ayant une épaisseur de couche (sₐ) de 2 mm au minimum et de 5 mm au maximum, au moyen d'un procédé d'extrusion,
- dans lequel, avant l'application de la couche de matière plastique (3) sur la couche intérieure (2), une couche d'agent adhésif destinée à améliorer la liaison entre la couche de matière plastique (3) et la couche intérieure (2) ainsi que la résistance au pliage de la conduite (1) est appliquée dans le procédé d'extrusion,
- de telle sorte que la conduite (1) peut être courbée sans former de pli avec un rayon intérieur de courbure (r) de 0,2 m selon un angle (α) de 90°,
- dans lequel la couche intérieure (2) est fabriquée à partir d'un ruban d'acier inoxydable (4) sans fin enroulé axialement en une forme tubulaire, dont les bords (5) adjacents sont soudés ensemble en continu dans la direction longitudinale axiale (x),
- dans lequel les bords (5) adjacents sont soudés ensemble avec un joint abouté (S), et
- dans lequel un acier inoxydable avec une teneur en chrome d'au moins 10 % en poids est utilisé pour la couche intérieure (2).

2. Procédé selon la revendication 1, **caractérisé en ce que** le ruban d'acier inoxydable (4) est enroulé sur un mandrin (7) qui est retiré après le processus de soudage.

3. Procédé selon la revendication 1 ou 2, **caractérisé en ce qu'**une couche intérieure (2) ayant un diamètre intérieur (dᵢ) de 5 à 15 mm est fournie.

4. Procédé selon l'une des revendications 1 à 3, **caractérisé en ce que** la couche intérieure (2) est enrobée d'une couche de matière plastique (3) en polyéthylène, en particulier polyéthylène réticulé.

5. Conduite multicouche (1) destinée au transport de réfrigérant dans une installation de climatisation, comportant
- une couche intérieure (2) sans fin en acier inoxydable ayant une épaisseur de couche (sᵢ) de 0,3 mm au maximum et un diamètre intérieur (dᵢ) de 3 à 20 mm et formant la couche la plus à l'intérieur de la conduite (1),
- une couche de matière plastique (3) extrudée ayant une épaisseur de couche (sₐ) de 2 mm au minimum et de 5 mm au maximum enrobant la couche intérieure (2) sans fin et
- une couche d'agent adhésif extrudée disposée entre la couche intérieure et la couche de matière plastique (3), qui améliore la liaison entre la couche de matière plastique (3) et la couche intérieure (2) ainsi que la résistance au pliage de la conduite (1),
- de telle sorte que la conduite (1) peut être courbée sans former de pli avec un rayon intérieur de courbure (r) de 0,2 m selon un angle (α) de 90°,
- dans lequel la couche intérieure (2) est fabriquée à partir d'un ruban d'acier inoxydable (4) sans fin enroulé axialement en une forme tubulaire, dont les bords (5) adjacents sont soudés ensemble en continu dans la direction longitudinale axiale (x), et
- dans lequel les bords (5) adjacents sont soudés ensemble avec un joint abouté (S), et
- dans lequel la couche intérieure (2) en acier inoxydable présente une teneur en chrome d'au moins 10 % en poids.

6. Installation de climatisation, comportant
- plusieurs composants d'installation (8, 9) espacés les uns des autres,
- un réfrigérant fluide qui circule entre les composants d'installation (8, 9) lors du fonctionnement de l'installation de climatisation et
- au moins une conduite (1) selon la revendication 5, qui relie les composants d'installation (8, 9) et qui sert au transport du réfrigérant entre les composants d'installation (8, 9).

7. Installation de climatisation selon la revendication 6, **caractérisée en ce que** la conduite (1) présente une longueur d'au moins 1 m, par exemple au moins 5 m, en particulier au moins 10 m.

8. Installation de climatisation selon la revendication 6 ou 7, **caractérisée en ce que** la conduite (1) réalise une liaison sans interruption entre les composants d'installation (8, 9).

9. Installation de climatisation selon l'une des revendications 6 à 8, **caractérisée en ce que** la conduite (1) est courbée une ou plusieurs fois avec un rayon de courbure (r) de 2 m au maximum, par exemple 1 m au maximum, en particulier 50 cm au maximum, selon un angle (α) d'au moins 5°, par exemple au moins 15°, en particulier au moins 30°.

10. Installation de climatisation selon l'une des revendications 6 à 9, **caractérisée en ce que** la conduite (1) est évasée à son extrémité pour le raccordement à un composant d'installation (8, 9).

11. Installation de climatisation selon la revendication 10, **caractérisée en ce que** l'extrémité de conduite évasée entoure un raccord (11) de forme conique du composant d'installation (8, 9) et est comprimée avec celui-ci.
